Europäisches Patentamt

European Patent Office

Office européen des brevets

(19)

(11) Publication number: **0 146 041**
**A2**

# (12) EUROPEAN PATENT APPLICATION

(21) Application number: **84114468.6**

(22) Date of filing: **29.11.84**

(51) Int. Cl.⁴: **G 06 F 3/06**

(30) Priority: **12.12.83 JP 191331/83**

(43) Date of publication of application: **26.06.85**
**Bulletin 85/26**

(84) Designated Contracting States: **DE GB NL**

(71) Applicant: **TEAC CORPORATION, 3-7-3, Naka-cho, Musashino-shi Tokyo (JP)**

(72) Inventor: **Shoji, Makoto, 2-16, Minamidenen, Fussa-shi Tokyo (JP)**
Inventor: **Sakai, Yoshiaki, 2-11-59, Hachimancho, Higashikurume-shi Tokyo (JP)**

(74) Representative: **Wey, Hans-Heinrich, Dipl.-Ing. et al, Patentanwälte Müller-Börner & Wey Widenmayerstrasse 49, D-8000 München 22 (DE)**

(54) **Data transfer system having a plurality of magnetic disk drives.**

(57) A data transfer system having a plurality of magnetic disk drives daisy chained to a central processor unit via a controller, with each disk drive being for use with a replaceable magnetic disk on which data are recorded along with clock pulses. A data/clock separation signal generator circuit is provided to only one of the disk drives, rather than to each disk drive, and has its input connected to the outputs of all the disk drives for generating a data/clock separation signal (e.g. a clock window signal) in response to the clock pulses contained in the readout signals from the disk drives. The output of the data/clock separation signal generator circuit is connected to the controller, which uses the data/clock separation signal for resolving the readout signal from each disk drive into the data pulses and clock pulses.

# DATA TRANSFER SYSTEM HAVING A PLURALITY OF MAGNETIC DISK DRIVES

## BACKGROUND OF THE INVENTION

Our invention relates to apparatus for at least reproduction of data from magnetic disks such as those commonly referred to as floppy disks, and more specifically to a data transfer system of the type having a plurality of daisy chained magnetic disk drives or files for selective data transfer to and from magnetic disks replaceably mounted therein.

Floppy disks have found widespread acceptance in information processing and allied industries as compact data storage media. Being thin and limply flexible, the disks are usually enclosed in more rigid, apertured envelopes to make up disk assemblies or cartridges that are self supporting. A variety of floppy disk drives (FDD) have been suggested and used for data transfer to and from such disk cartridges. U.S. Patent 3,678,481 to Dalziel et al. and U.S. Patent 4,089,029 to Castrodale et al. represent examples of such known FDDs.

It has also been known to "daisy chain" a plurality of FDDs to a central processor unit (CPU) via a controller, with the FDDs in a parallel relation to one another, for selective use of the magnetic disks replaceably mounted in the FDDs.

A problem has existed with such a daisy chain of FDDs. The magnetic disks for use with the FDDs have data recorded thereon by the modified frequency modulation (MFM) or frequency modulation (FM) method. Either way, data are recorded together with clock pulses on the same tracks on the disks. On reading the disks, therefore, the recovered data must be separated from the clock pulses. The separation of the data from the clock pulses require the creation of data/clock separation signals known as a data window signal and a clock window signal. Either the data window or the clock window signal can be fabricated from the clock pulses contained in the readout signal along with the recovered data. The readout signal is therefore fed to a data/-clock separation signal generator circuit in the form of a variable frequency oscillator (VFO) of the phase locked loop (PLL) circuit configuration. The VFO responds to the clock pulses included in the readout signal for generating either of the data window signal and the clock window signal in synchornism with the clock pulses. The other window signal can be produced from the window signal generated by the VFO, simply by inverting the phase of the latter.

Conventionally, the VFO has been provided either to each of the daisy chained FDDs or to the controller. The provision of the VFO to each FDD is objectionable because only a selected one of the daisy chained FDDs is used for data transfer at one time. The VFOs of the other FDDs are not in use then. That is to say, only one of the VFOs of the daisy chained FDDs are in use at any time. A substantial saving in the manufacturing costs of the FDDs will be possible if a single VFO can serve all the daisy chained FDDs.

One VFO suffices if it is incorporated with the controller, as has been practiced heretofore. However, this alternative is not truly satisfactory as the VFO makes more complex and substantially more expensive the integrated circuitry of which the controller is made.

## SUMMARY OF THE INVENTION

We have hereby succeeded in employing but one VFO, or quivalent data/clock separation signal generator circuit, in a data transfer system of the type under consideration without the difficulties encountered heretofore.

Stated briefly, our invention is directed to a data transfer system having a plurality of disk drives daisy chained to host equipment, for use with magnetic disks having data and a clock signal recorded on the same tracks thereon. Each disk drive has a transducer head for data transfer with one magnetic disk, a read circuit connected to the transducer head for providing a readout signal containing data pulses and clock pulses corresponding respectively to the data and clock signal that have been read from the magnetic disk by the transducer head, and a gate circuit for allowing the selective passage therethrough of the readout signal from the read circuit. The gate circuits of all the disk drives are connected to the host equipment via a common output line for the selective delivery thereto of the readout signal from only one of the disk drives at one time. Characteristically, our invention provides to only one of the disk drives a data/clock separation signal generator circuit responsive to the readout signals from the disk drives for generating a data/clock separation signal to be used by the host equipment for separating the readout signal from any of the disk drives into the data pulses and clock pulses. The data/clock separation signal generator circuit is connected between the outputs of the gate circuits of all the disk drives and the host equipment.

Thus, when any of the disk drives is selected to deliver its readout signal to the host equipment, this readout signal is supplied not only to the host equipment but also to the the data/clock separation signal generator circuit provided to only one of the disk drives. The data/-clock separation signal generator circuit responds to the readout signal by generating a data/clock separation signal, which in practice may be either a data window signal or clock window signal, for delivery to the host equipment. The data/clock separation signal generator circuit can be a VFO.

The provision of the data/clock separation signal generator circuit to only one of the disk drives in accordance with our invention, rather than to each of the disk drives or to the controller of the host equipment in accordance with the prior art, realizes a remarkable reduction of the cost of the complete data transfer system. As an additional advantage, the single data/clock separation signal generator circuit can be connected to the controller more readily than when it is provided to each disk drive, and the controller needs but one input terminal for connection with the data/clock separation signl generator circuit.

The above and other features and advantages of our invention and the manner of realizing them will become more apparent, and the invention itself will best be understood, from a study of the following description and appended claims, with reference had to the attached drawings showing a preferred embodiment of our invention.

## BRIEF DESCRIPTION OF THE DRAWINGS

FIG. 1 is a block diagram of the data transfer system embodying the novel concepts of our invention, the system having four FDDs daisy chained to a CPU via a controller;

FIG. 2 is a block diagram of the single data/clock separation signal generator circuit incorporated in one of the FDDs in the data transfer system of FIG. 1, the circuit being shown together with an associated part of the controller;

FIG. 3 is a diagram explanatory of the known format by which data are recorded along with a clock signal on each magnetic disk for use with the data transfer system of FIG. 1;

FIG. 4 is a waveform diagram explanatory of the way a clock window signal and a data window signal are created in synchronism with the clock pulses read from the synchronizing regions of the magnetic disk of FIG. 3; and

FIG. 5 is a waveform diagram explanatory of the way data are derived from the readout signal, composed of data pulses and clock pulses, by the data window signal of FIG. 4.

## DESCRIPTION OF THE PREFERRED EMBODIMENT

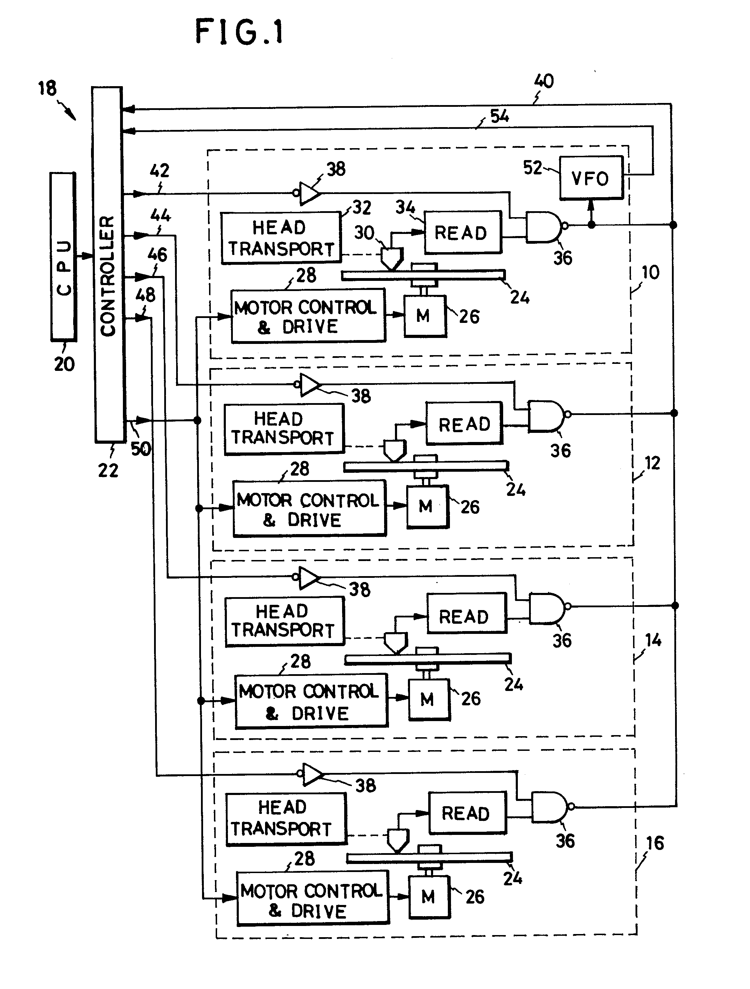

We will now describe our invention in detail as applied to the data transfer system of FIG. 1 wherein four FDDs 10, 12, 14 and 16 are daisy chained to host equipment 18 comprising a CPU 20 and a controller 22. All the FDDs 10, 12, 14 and 16 can be of like construction, except for the data/clock separation signal generator circuit to be incorporated in one of them, so that the description of one applies to all the others. We will therefore describe only the first FDD 10 in detail, and the components of the other FDDs 12, 14 and 16 will be identified, where necessary, by the same reference numerals as used to denote the corresponding parts of the first FDD 10.

The representative FDD 10 is shown to have mounted therein a flexible magnetic disk 24 of the familiar cartridge form such as disclosed in the aforementioned U.S. Patents 3,678,481 and 4,089,029. Clamped in position in the FDD 10, the magnetic disk 24 is revolved by a disk drive motor 26 under the control of a motor control and drive circuit 28. A magnetic transducer head 30 is arrranged for data transfer with the magnetic disk 24. A head transport mechanism 32 is coupled to the transducer head 30 for its access to the tracks of the magnetic disk 24. Electrically, the transducer head 30 is coupled to a read circuit 34 and thence to one of the two inputs of a gate circuit herein shown as an open collector NAND circuit 36. The other input of this NAND circuit is connected via an inverter 38 to the controller 22 to receive therefrom a DRIVE SELECT signal intended for the selective use of the FDDs. The output of the NAND circuit 36 is connected to the controller 22 by way of an output line 40 common to all the FDDs 10, 12, 14 and 16. The FDD 10 is further provided with a write circuit, photoelectric sensors and sensor controls, and other circuitry. We have not illustrated these additional means as they bear no direct pertinence to our invention.

The construction of the representative FDD 10 as so far described, as well as that of the other FDDs 12, 14 and 16, is conventional and well known to the specialists. We believe, therefore, that no further detailed description of such known parts of the FDDs is necessary.

The host equipment 18 comprising the CPU 20 and controller 22 is also familiar to the specialists. The controller 22 is generally referred to as the FDD controller, or FDC, comprising a CPU interface, a controller/formatter, and an FDD interface. It functions to deliver various control signals, as well as data to be written, to the FDDs 10, 12, 14 and 16, and to receive signals and recovered data from the FDDs. As far as our invention is concerned, the following connections between controller 22 and FDDs 10, 12, 14 and 16 are important.

The controller 22 is connected as aforesaid to the inverters 38 of the FDDs 10, 12, 14 and 16 via respective output lines 42, 44, 46 and 48 for the delivery of the DRIVE SELECT signals. Each DRIVE SELECT signal is to go low when data is to be read out from the associated FDD. Of course, only one DRIVE SELECT signal is to go low at one time, so that data is not to be simultaneously read out from two or more of the FDDs 10, 12, 14 and 16. The inverters 38 invert the DRIVE SELECT signals, causing the NAND circuits 36 connected thereto to allow the passage of the recovered data (as well as clock pulses that have been read also from the magnetic disks 24) therethrough, on to the controller 22 by way of the common output line 40, when the DRIVE SELECT signals are low. Further, the controller 22 is connected to the motor control and drive circuits 28 of the FDDs 10, 12, 14 and 16 by way of a common output line 50 for the delivery of a MOTOR ON signal common to all the FDDs. The MOTOR ON signal simultaneously sets the disk drive motors 26 of all the FDDs 10, 12, 14 and 16 into and out of rotation.

Our invention particularly features the arrangement of a data/clock separation signal generator circuit 52 which functions to generate, in response to the readout signal from the NAND circuits 36 of the FDDs 10, 12, 14 and 16, a data/clock separation signal to be used by the controller 22 for resolving the readout signal into data pulses and clock pulses. The data/clock separation signal generator circuit 52 is provided to only the first 10 of the four daisy chained FDDs 10, 12, 14 and 16, although this circuit could be provided to any one of the other three FDDs 12, 14 and 16. The data/clock separation signal generator circuit 52 can take the form of a VFO, as we will describe in more detail subsequently, so that we will hereinafter refer to this circuit as the VFO.

The VFO 52 has its input connected to the output of the NAND circuit 36 of the first FDD 10. As we have stated, the NAND circuits 36 of all the FDDs 10, 12, 14 and 16 are connected to the common output line 40 and, therefore, are in OR connection with respect to one another. Consequently, the VFO 52 has its input connected to the outputs of the NAND circuits 36 of all the FDDs 10, 12, 14 and 16. The output of the VFO 52 is connected to the controller 22 of the host equipment 18 by way of a line 54.

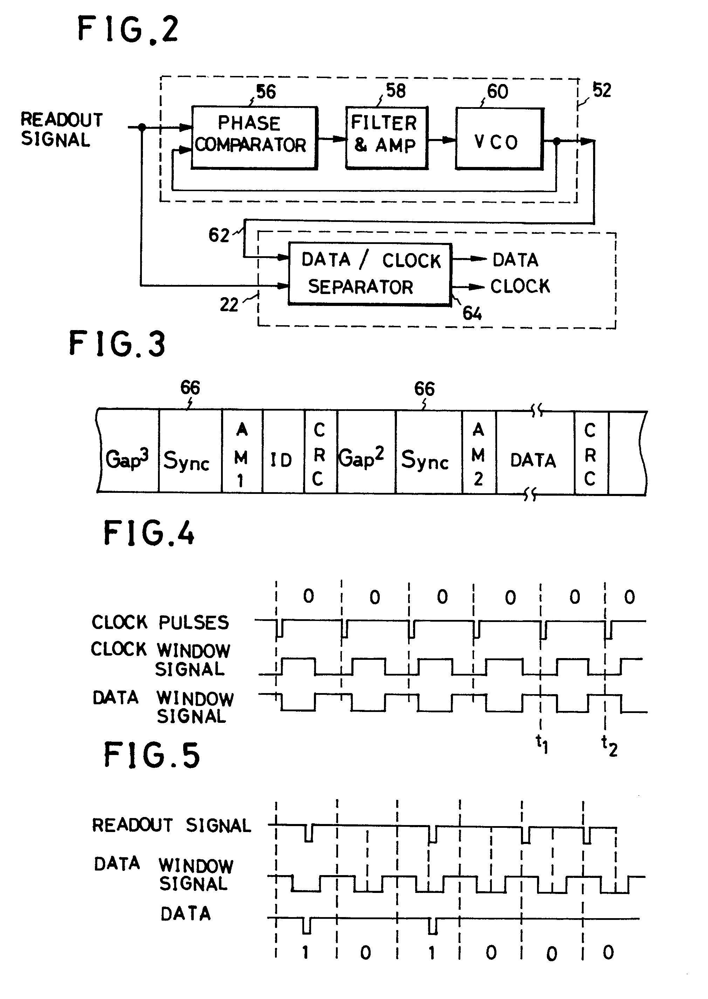

As illustrated in FIG. 2, the VFO 52 is of the phase locked loop configuration, comprising a phase comparator 56, filter and amplifier circuit 58, and voltage controlled oscillator (VCO) 60. The phase comparator 56 has a first input connected to the NAND circuits 36 of all the FDDs 10, 12, 14 and 16, and a second input connected to the output of the VCO 60. It is the function of the phase comparator 56 to detect the phase of the clock pulses included in the output from the magnetic disks 24. The output from the phase comparator 56 is directed via the filter and amplifier circuit 58 to the VCO 60. In response to the incoming clock pulses, the VCO 60 puts out a clock window signal as the data/clock separation signal required for separating the outputs from the read circuits 34 into data pulses and clock pulses, as will be later explaiend in further detail.

Besides being connected to the phase comparator 56 as above, the output of the VCO 60, or of the VFO 52, is connected by way of a line 62 to a data/clock separator 64 included in the controller 22 of the host equipment 18, as shown also in FIG. 2. The data/clock separator 64 inputs not only the clock window signal from the VFO 52 but also the readout signals from the FDDs 10, 12, 14 and 16. A logic gate circuit, not shown, included in the data/clock separator 64 responds to these input signals to derive the clock pulses from the readout signals. Another logic gate circuit of the data/clock separator 64 inputs both the readout signals and a data window signal, the latter being a phase inversion of the clock window signal, to derive the data pulses from the readout signals. Such operation of the VFO 52 and data/clock separator 64 will become more apparent from the subsequent description of operation.

The VFO 52 may be fabricated by use of the IC chip HA16632 manufactured and distributed by Hitachi Ltd., of Tokyo, Japan.

FIG. 3 is explanatory of the known format by which data to be read out and other information are written on the tracks of each magnetic disk 24. The tracks have synchronizing (sync) regions 66 where data are not written, or in a logical "0" state, but where there are written, instead, a series of low level clock pulses at spacings of two microseconds, for example, as illustrated in FIG. 4. Accordingly, on reading these sync regions 66 of the disk tracks by the transducer head 30, the associated read circuit 34 puts out only the clock pulses, for delivery to the phase comparator 56, FIG. 2, of the VFO 52, as well as to the controller 22 of the host equipment 18, via the NAND circuit 36. In response to these clock pulses, the VFO 52 puts out, as the data/clock separation signal, the clock window signal in the form of a series of pulses synchronized with the clock pulses by virtue of the PLL performance of the VFO.

FIG. 4 is a waveform diagram plotting, along with the clock pulses read out from each magnetic disk 24, the clock window signal produced by the VFO 52 from the clock pulses, and the data window signal produced by inverting the phase of the clock window signal. It will be seen from this diagram that the clock window signal goes low, as at moments $t1$ and $t2$, in synchronism with the low level clock pulses, whereas the data window signal goes low during the high level spacings between the clock pulses.

## OPERATION

The disk drive motors 26 of all the FDDs 10, 12, 14 and 16 set the magnetic disks 24 into rotation upon delivery of the MOTOR ON signal from the controller 22 of the host equipment 18 to the motor control and drive circuits 28 of the FDDs by way of the line 50. Let it be assumed that the DRIVE SELECT signal delivered from the controller 22 to the first FDD 10 has subsequently gone low. Inverted by the inverter 38 of the first FDD 10, the DRIVE SELECT signal will cause the NAND circuit 36 to pass the output from the read circuit 34. The transducer head 30 is moved into data transfer contact with the magnetic disk 24, in a radial position thereon determined by the head transport mechanism 32, to start reading the disk. Connected to the transducer head 30, the read circuit 34 shapes the output therefrom into a form suitable for subsequent processing.

If each magnetic disk 24 has information recorded thereon by the MFM scheme, then the readout signal from the read circuit 34, representing a datum "101000", for example, will be as plotted in FIG. 5, containing clock pulses along with the data pulses.

Passing the NAND gate 36 that has been opened by the inverted DRIVE SELECT signal from the controller 22, the readout signal from the read circuit 34 will be delivered to the VFO 52, besides being fed directly to the controller 22 by way of the line 40. In response to the incoming readout signal, or to the clock pulses contained therein, the VFO 52 will put out the clock window signal of FIG. 4, for delivery to the data/clock separator 64 of the controller 22 by way of the line 54. The data/clock separator 64 inverts the phase of the incoming clock window signal to provide the data window signal seen in both FIGS. 4 and 5. The gate circuit included in the data/clock separator 64 allows the passage of the readout signal of FIG. 5 only during the low states of the data window signal. Thus the desired data can be derived from the readout signal as in FIG. 5. The data/-clock separator 64 operates in a like manner to derive the clock pulses from the readout signal by the clock window signal.

When the DRIVE SELECT signal supplied from the controller 22 to the second FDD 12 subsequently goes low, after the DRIVE SELECT signal for the first FDD 10 has gone high, the NAND circuit 36 of the second FDD will likewise deliver the readout signal from the second magnetic disk 24 to the controller 22 of the host equipment 18 by way of the common output line 40. Further, since the output lines of all the FDDs 10, 12, 14 and 16 are in OR connection, the readout signal from the second FDD 12 will also enter the VFO 52 provided to the first FDD 10. The VFO 52 will respond to the readout signal from the second FDD 12 by producing the clock window signal as the data/clock separation signal. Subsequently applied to the data/clock separator 64 of the controller 22, the clock window signal will be thereby used for separating the readout signal from the second FDD 12 into data pulses and clock pulses.

It is thus seen that the single VFO 52 provided to the first FDD 10 functions in a like manner to put out the data/clock separation signal in response to the readout signal from any of the FDDs 10, 12, 14 and 16. Accordingly, whenever a plurality of FDDs are daisy chained, only one of them may be provided with a VFO in accordance with the teachings of our invention, with the consequent advantages set forth previously.

Although we have shown and described our invention in terms of but one embodiment thereof, we recognize that our invention could be embodied in other forms within the broad teaching hereof. The following, then, is a brief list of possible modifications of the illustrated embodiment that may be resorted to without departing from the scope of our invention:

1. Magnetic disks for use with the data transfer system of our invention could have data recorded thereon in the FM format such that clock pulses are recorded throughout the tracks.

2. The disk drive motors of the FDDs might be set into rotation in response to the initial low state of any DRIVE SELECT signal or of the associated DRIVE SELECT signal, instead of to the common MOTOR ON signal.

3. The data pulses, clock pulses, etc., could be positive pulses, instead of negative pulses as in the illustrated embodiment.

4. The NAND circuits of the FDDs might be replaced by other types of gate circuits.

5. Our invention finds use not only with the flexible magnetic disk cartridges of the type disclosed in the above noted U.S. patents but also with other types of magnetic disks such as, for example, those disclosed in Japanese Laid Open Patent Application 57-36473. Hard, rather than flexible, magnetic disks also find use with our invention.

WHAT WE CLAIM IS:

1.  A data transfer system for use with magnetic disks having data and a clock signal recorded on the same tracks thereon, the system having a plurality of disk drives daisy chained to host equipment, each disk drive including a transducer head for data transfer with one magnetic disk, a read circuit connected to the transducer head for providing a readout signal containing both data pulses and clock pulses corresponding respectively to the data and clock signal that have been read from the magnetic disk by the transducer head, and a gate circuit for allowing the selective passage therethrough of the readout signal from the read circuit, the gate circuits of all the disk drives being connected to the host equipment via a common output line for the selective delivery thereto of the readout signal from only one of the disk drives at one time, wherein the improvement comprises a data/clock separation signal generator circuit responsive to the readout signals from the disk drives for generating a data/clock separation signal to be used by the host equipment for separating the readout signal from any of the disk drives into the data pulses and clock pulses, the data/clock separation signal generator circuit being provided to only one of the disk drives and being connected between the outputs of the gate circuits of all the disk drives and the host equipment, so that the single data/clock separation signal generator circuit serves all the disk drives.

2.  The data transfer system of claim 1 wherein the data/clock separation signal generator circuit is a variable frequency oscillator.

0146041

# FIG.1

0146041

## FIG.2

## FIG.3

| Gap³ | Sync | A M 1 | ID | C R C | Gap² | Sync | A M 2 | DATA | C R C | |
|------|------|-------|----|-------|------|------|-------|------|-------|--|

## FIG.4

## FIG.5